# EUROPÄISCHE PATENTSCHRIFT

(11) **EP 0 703 424 B1**
(45) Veröffentlichungstag und Bekanntmachung des Hinweises auf die Patenterteilung: **15.11.2000**
(21) Anmeldenummer: 95113664.7
(22) Anmeldetag: 31.08.1995
(51) Int. Cl.: F28D 1/03

(54) **Wärmetauscher in Plattenbauweise**
Heat exchanger constructed as an assembly of plates
Echangeur de chaleur constituée par un assemblage de plaques

(30) Priorität: 16.09.1994 DE 4433165
(43) Veröffentlichungstag der Anmeldung: 27.03.1996
(73) Patentinhaber: MTU Motoren- und Turbinen-Union Friedrichshafen GmbH, 88045 Friedrichshafen (DE)
(72) Erfinder: de Lazzer, Karl-Heinz, Dipl.-Ing., D-88045 Friedrichshafen (DE); Haug, Franz, Dr.-Ing., D-88074 Brochenzell (DE)

(56) Entgegenhaltungen:
- EP-A- 0 545 842
- GB-A- 2 086 030

## Beschreibung

Die Erfindung betrifft Wärmetauscher in Plattenbauweise, insbesondere Plattenwärmetauscher in Ausführungsführungen als wassergekühlte Ladeluftkühler mit luftseitigen Lamellenplatten.

Aus der EP 0 545 842 A1 geht bereits eine Einrichtung zur Ladeluftkühlung als bekannt hervor, die aus zwei mit Abstand zueinander aneinandergereihten Wärmetauschern besteht. Ein erster Wärmetauscher dient zur Kühlung der Ladeluft mit als Flachrohre ausgebildeten Luftkanälen. Als Kühlmedium dient in diesem ersten Wärmetauscher einmal Wasser, das in Rohren innerhalb der Luftkanäle geführt wird, und zur Erhöhung der Wärmeübertragungsfläche mit Lamellenplatten verbunden sind. Außerdem ist die Außenseite der Luftkanäle des ersten Wärmetauschers mit Lamellenplatten verbunden, durch die Umgebungsluft als weiteres Kühlmedium strömt. Das als Kühlmittel verwendete Wasser wird in einem zweiten Wärmetauscher seinerseits gekühlt, wobei die Kühlung des Kühlmittels ebenfalls durch Umgebungsluft erfolgt. Die beiden Wärmetauscher besitzen unterschiedliche Kühlkreisläufe und dienen entsprechend unterschiedlichen Kühlzwecken. Die Größe der Wärmetauscher ist durch die erforderliche Kühlleistung bestimmt.

Aus der GB 2 086 030 A geht es als bekannt hervor, einen Wärmetauscher für brennkraftmaschinengetriebene Fahrzeuge aus einer Anzahl von, abgesehen von den Anschlüssen, identischen Bausteinen zusammenzusetzen. Die Anzahl der Teilblöcke richtet sich nach der gewünschten Kühlleistung. Die einzelnen Wärmetauscherelemente werden im Bereich der Sammelgehäuse mit Steckverbindungen gekoppelt. Die Teilungsebenen zwischen den Teilblöcken verlaufen senkrecht zur Ausdehnungsrichtung der Wärmetauscherplatten, die in der Kühlerebene liegen.

Plattenwärmetauscher bestehen prinzipiell aus einer Anzahl von Wänden, welche den zu kühlenden Luft- oder Flüssigkeitsstrom und Kühlmittelströme so führen, daß zwischen diesen beiden Medien keine Vermischung stattfinden kann. Der Wärmeaustausch erfolgt somit unmittelbar über die Wände und Lamellen, die im allgemeinen aus einem gut wärmeleitenden Metall bestehen. Zur Minimierung des Bauaufwands werden die Medienströme nach dem Kreuz- oder Kreuzgegenstrom-Prinzip geführt.

Hinsichtlich ihres prinziellen Aufbaus können wassergekühlte Plattenwärmetauscher in Rundrohr-Kühlersysteme und Flachrohr-Kühlersysteme eingeteilt werden. Von diesen beiden Kühl-Systemen weist das Flachrohr-Kühlersystem bei gleichen Bauabmessungen ein günstigeres Verhältnis zwischen Kühlleistung zu ladeluftseitigem Druckverlust auf, da Flachrohre, bedingt durch ihre strömungsgünstige Form, geringere Druckverlustwerte auf der Ladeluftseite verursachen und dadurch intensiver berippt werden können. Bei diesem Bauprinzip eines gattungsgemäßen Plattenwärmetauschers sind daher Wasserkanäle und Luftführungskanäle in regelmäßiger Anordnung als Schichtung mehrerer Platten zu einem Kühlerblock zusammengefaßt und untereinander komplett hart verlötet. Der dadurch in seiner Gestalt festgelegte Kühlerblock wird fertig vormontiert in einen Aufnahmerahmen eingesetzt und angeschweißt, welcher gleichzeitig die kühlmitteldurchströmten Wassersammelkästen und Leiteinrichtungen für die zu kühlende Luft ausbildet.

Dieser prinzielle Aufbau eines von Kühlmittel umgebenen Kühlerblocks, welcher selbst von dem heißen, abzukühlenden Medium durchströmt wird und sich dabei entsprechend erwärmt, führt grundsätzlich zu großen Wärmespannungen innerhalb der gesamten Struktur. Durch diesen Aufbau mit einem Kühlmantel außen und einer heißen Kühlerblockmatrix innen ist im Betrieb des Wärmetauschers zwangsläufig ein Temperaturgefälle vom Kühlerblockinneren nach außen zum Kühlmantel hin bedingt. In Folge der sich daraus einstellenden unterschiedlich hohen Temperaturen erfährt der Kühlerblock durch die kälteren Wassersammelkästen eine Dehnungsbehinderung, welche zu Verformungen der mit den Wassersammelkästen verschweißten Anschlußstellen der Wasserkanäle führt.

Zur Eindämmung dieser temperaturbedingten Ausdehnung des Kühlerblocks wurden in neueren Ausführungen von Plattenwärmetauschern, im speziellen Ladeluftkühler, die Seitenwände ebenfalls vom Kühlmittel durchströmt gekühlt. Durch diese Maßnahme konnten zwar die Längsdehnungen der einzelnen Platten und das Dehnungsverhalten der Seitenwände aufeinander abgestimmt werden, jedoch treten nach wie vor temperaturbedingte Dehnungsunterschiede zwischen dem Kühlerblock und den Wasserkästen in einer zur Plattenebene senkrechten Richtung auf. Ursache für diese in Querrichtung auftretende Wärmedehnung sind die jeweils zwischen zwei Wasserkanälen mäanderförmig gelegten und mit den Wasserkanalwandungen hart verlöteten Lamellen der ladeluftführenden Lamellenplatten. Die Längenausdehnungen der Lamellen führt dabei zu einem temperaturabhängigen Aufweiten der einzelnen Plattenschichten, wobei sich die Wärmedehnungen der einzelnen Lamellenschichten über die Breite des Kühlerblocks aufaddieren.

Da der Kühlerblock - und insbesondere die Anschlußstellen der Wasserkanäle - fest mit den Wasserkästen verschweißt sind und deshalb keine Relativverschiebung zulassen, führt jede Temperaturerhöhung des Kühlerblocks zwangsläufig zu einer Durchbiegung der Kanäle in Querrichtung. Die Durchbiegung der einzelnen Kanäle wiederum führt an den Anschlußstellen zu Winkeländerungen, welche folglich mit zunehmender Temperaturdifferenz von Luft zu Wasser, sprich der den Wärmetauscher durchströmenden Medien, sowie mit zunehmender Kühlerbreite, sprich Anzahl der Plattenschichten, zunehmen.

Durch diese temperaturbedingten Verformungen werden insbesonders bei Ladeluftkühlung von hoch aufgeladenen Motoren und großer Lastamplitude große Ladelufttemperaturschwankungen erzeugt, durch die bei Betriebslastkollektiven mit großer Lastwechselzahl die Zeitwechselfestigkeit der verwendeten Werkstoffe zu früh erreicht wird. Unerwünschte Folgen hiervon sind Beschädigungen der Anschlußstellen mit Übertritt der Medien.

Eine weitere Schadensquelle für den Ladeluftkühler in Plattenbauweise stellen ferner die temperaturbedingten Verformungen der Luftlamellen an einer oder mehrerer Lamellenreihen dar. Während sich nämlich, wie oben geschildert, die einzelnen Plattenschichten bei Temperaturerhöhungen in Querrichtung durchbiegen, addieren sich die einzelnen Wärmeausdehnungen über die Querrichtung bis hin zu den Seitenwänden. Aufgrund der sich temperaturbedingt wenig ausdehnenden und daher gegenüber dem Kühlerblock als steif zu betrachtenden Wasserkästen führen diese Wärmeverschiebungen verstärkt in den weiter außenliegenden Luftlamellenschichten zu Verformungen der Lamellen selbst. Dabei werden die Lamellenschichten gegen die kühlmittelgekühlten und als steif zu betrachtenden Seitenwände gedrückt und zum Teil plastisch verformt. Da die Lamellenschlingen jedoch in ihren Scheitelpunkten jeweils mit der angrenzenden Wasserkanalwandung fest verlötet und damit in ihrer Lage eindeutig festgelegt sind, erfahren die bei hohen Temperaturen gequetschten Lamellen im Abkühlungsfall, also bei der Ladelufttemperatur zunächst eine elastische und danach eine plastische Rückdehnung die, wie oben beschrieben, bei entsprechend häufig auftretenden Lastwechseln des Motors zum Überschreiten der Wechseldauerfestigkeit der Lamellenmaterialien und damit zu Brüchen der Lamellen führt. Die durch solche Entlastungsrisse entstehenden U-förmigen, nur noch an einer Stelle angelöteten Lamellenstücke werden durch die sie durchströmende Ladeluft in Schwingung versetzt und reißen sich los. Auf diese Weise besteht die Gefahr, daß die Lamellenstücke in den Brennraum gelangen, und/oder die relativ dünnen Wände der Wasserkanäle durchscheuem oder anreißen und so zu Beschädigungen führen.

Der Erfindung liegt das technische Problem zugrunde, einen Plattenwärmetauscher derart weiterzubilden, daß auf Wärmedehnungseffekte zurückzuführende Beschädigungen vermieden werden.

Dieses Problem wird gemäß den Merkmalen des Patentanspruchs 1 oder 2 gelöst.

Die Unteransprüche enthalten zweckmäßige Weiterbildungen der Erfindung.

Erfindungsgemäß wird die ansonsten fest miteinander hart verlötete Struktur des Kühlerblocks entlang einer oder mehreren zur Plattenebene parallelen Ebene(n) ein oder mehrere Male unterbrochen. Die Ebene(n) verläuft nach Anspruch 1 entlang einer Berührungsebene einer Blechplatte eines Wasserkanals und einer daran angrenzenden Lamellenplatte. Nach Anspruch 2 sind die einander zugewandten Platten zweier aneinandergrenzender Teilblöcke des Kühlerblocks als Lamellenplatten ausgebildet. Diese Unterbrechung des für sich gesehen formsteifen Kühlerblocks entlang einer Plattenfläche sieht eine planmäßige Strukturschwächung der entsprechenden Luftlamellenplattenschicht vor. Die ansonsten beidseitig an den jeweils angrenzenden Wasserkanalwänden angelöteten Lamellenschlingen bilden gemeinsam eine formsteife Sandwich-Struktur, die Ursache dafür ist, daß auftretende Kräfte, wie im geschilderten Fall, Wärmedehnungsspannungen in die Gesamtstruktur weitergeleitet und von dieser gesamthaft aufgenommen werden. Dadurch, daß nun eine gezielte Schwächung dieser Gesamtstruktur vorgesehen ist, wird der Aufsummationseffekt der Einzelkräfte in entsprechend der vorgesehenen Anzahl an Unterteilungen viele Teilsummen erreicht. Über den Gesamtaufbau der Kühlmatrix gesehen wird dadurch also ein quasi nach außen Wandern der Wärmeverschiebung bis in die äußeren Lamellenschichten planmäßig unterbrochen; infolgedessen kann die in den äußeren Schichten große Verschiebeamplitude in von mehreren Lamellenschichten aufgenommene betragsmäßig kleinere Verschiebungen aufgeteilt werden.

Im Gegensatz zu der bislang auftretenden betragsmäßig großen Quetschung der äußeren Lamellen, kann also die Wärmedehnung erfindungsgemäß in betragsmäßig kleinere Strecken aufgeteilt werden.

Die erfindungsgemäß vorgesehene Sollschwachstelle der Kühlstruktur selbst, ist in Folge eben dieser Schwächung nicht mehr in der Lage, die auf sie einwirkenden Kräfte an die Nachbarstruktur weiterzugeben, sondern wird, wie zuvor die äußeren Lamellenschichten, plastisch verformt. Im Unterschied zu den bisherigen Verformungen stellt die Verformung der Sollschwachstelle gemäß der Erfindung nun jedoch einen Kalibriervorgang dar, bei dem sich der Kühlerblock selbsttätig an die in seiner Struktur auftretenden Wärmedehnungsverhältnisse anpaßt und dadurch keinen bleibenden Schaden nimmt.

Zwar werden in der Sollschwachstelle die Lamellen ebenfalls im Scheitelpunkt der Durchbiegung mehr und in Richtung der Anschlußstellen hin weniger stark plastisch verformt, jedoch erfolgt diese Verformung nur einmalig während des Kalibriervorgangs und dann auch nur in eine Richtung. Aufgrund der erfindungsgemäßen Strukturunterbrechung, besteht entlang der Trennebene keine kraftschlüssige Verbindung mehr zwischen den dort angrenzenden Plattenschichten, so daß im konkreten Fall die zuvor plastisch gestauchten Lamellen bei Abkühlung der Kühlermatrix nun keiner plastischen Rückdehnung mehr unterliegen. Nach erfolgtem Kalibriervorgang haben die Lamellen der Trennebene erfindungsgemäß nun lediglich einer schwellenden Belastung Stand zu halten und werden nicht mehr, wie bisher, einer Dauerwechselbeanspruchung unterzogen. Die schwellende Belastung kann dabei problemlos über die elastische Verformbarkeit der Lamellen kompensiert werden.

Grundsätzlich kann die Aufteilung der Kühlermatrix in zwei oder mehrere schmälere, nebeneinanderstehende jedoch nicht miteinander verlötete Teilblöcke ohne oder mit geringem dazwischenliegendem Abstand vorgesehen werden. Unabhängig von dem jeweils vorgesehenen Abstand betragen die Durchbiegung und Winkeländerung der Wasserkanäle dementsprechend nur noch 1/2 bis 1/n der bisherigen Werte. Damit werden ausgewählte Lamellenschichten unabhängig von der Ausführungsform eines erfindungsgemäßen Kühlerblockes nur noch in einem so geringen Maße mechanisch beansprucht, daß ein Materialversagen aufgrund der Wärmedehnung wesentlich verringert werden kann.

Bei Ausführungsformen der Erfindung, bei denen die einzelnen Teilblöcke mit gegenseitigem Abstand vorgesehen sind, kann durch die Dimensionierung dieses Abstandes das Ausmaß der einmalig während des Kalibriervorganges angestrebten plastischen Verformung der Lamellenschicht gelenkt werden. Darüberhinaus kann jedoch auch die einmalige plastische Verformung durch entsprechende Abstandswahl ganz ausgeschlossen werden.

Eine derartige Ausbildung des Kühlerblocks bietet insbesondere bei Einsatzfällen mit extremen Temperaturschwankungen eine zuverlässige Vorkehrung gegen wärmedehnungsbedingte Beschädigungen des Ladeluftkühlers und/oder des Motors selbst.

Demgegenüber kann in Anwendungsfällen mit geringeren Temperaturschwankungsamplituden ein groß vorgesehener Abstand die Kühlleistung des Wärmetauschers merklich verschlechtern, da ein relativ großer Ladeluftmassenstrom an dieser Stelle nahezu ungehindert durch die Kühlmatrix strömen kann. Eine Abhilfe für diese Leistungseinschränkung bietet die Ausführungsform der Erfindung nach Anspruch 2, bei der vorgesehen ist, die Kühlermatrix nicht entlang einer Berührebene zwischen Wasserkanal und angrenzender Lamellenplatte zu legen, sondern an Stelle der einseitig festgelöteten Lamellenschicht zwei schmälere, jeweils einseitig mit einer der einander gegenüberliegenden Wasserkanalwände verlötete Lamellenschichten anzuordnen, die ohne gegenseitige kraftschlüssige Verbindung gemeinsam den Trennspalt zwischen zwei Teilblöcken mit Lamelle durchsetzen. Treten Wärmedehnungen ein, so werden bei dieser Ausführungsform, die zwei aufeinanderzugerichteten Lamellenschichten aufeinander und teilweise ineinander geschoben. Aufgrund der Biegeelastizität der einseitig festgelöteten Lamellen werden diese nicht zwangsläufig plastisch verformt, sondern weichen unter elastischer und/oder einmaliger plastischer Verformung seitlich aus und können dadurch ineinandergeschoben werden.

Weitere zweckmäßigere Ausgestaltungen der Erfindung sowie eine nähere Erläuterung sind in der nachfolgenden Beschreibung enthalten, die sich auf drei in den Zeichnungen dargestellte Ausführungsbeispiele bezieht. In der Zeichnung zeigt:
- Figur 1:: eine Querschnittdarstellung eines ersten Ausführungsbeispiels mit Abstand im Ausgangszustand;
- Figur 2:: das Ausführungsbeispiel aus Figur 1 im Betriebszustand ohne plastische Verformung;
- Figur 3:: ein zweites Ausführungsbeispiel der Erfindung im Betriebszustand nach dem Kalibriervorgang;
- Figur 4:: ein drittes Ausführungsbeispiel der Erfindung mit Doppellamellenschicht.

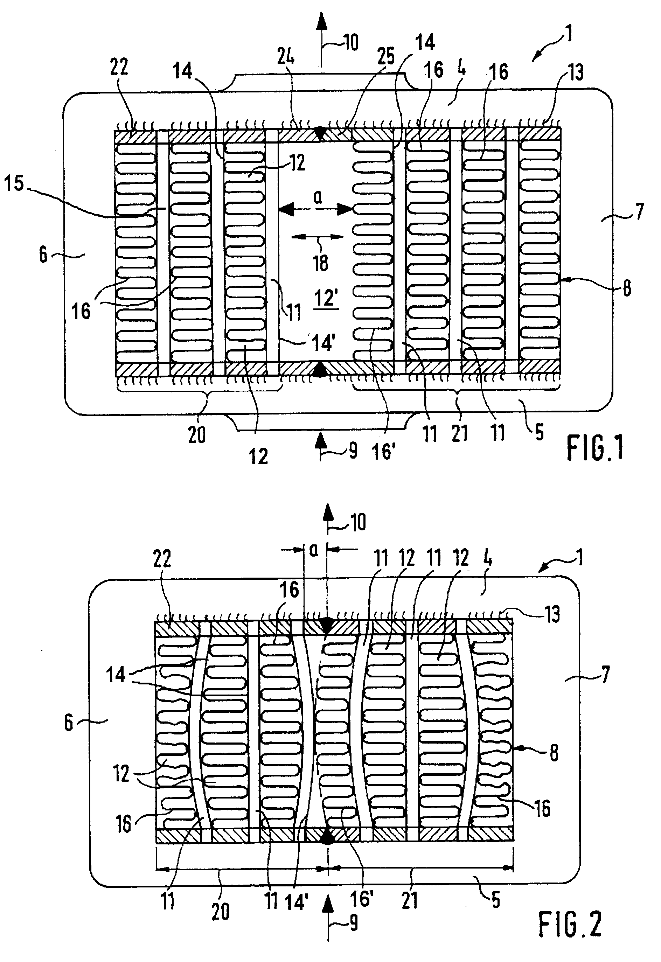

In den Figuren 1 und 2, 3 und 4 sind insgesamt drei Ausführungsbeispiele des erfindungsgemäßen wassergekühlten Ladeluftkühlers dargestellt. In allen drei Ausführungsbeispielen bzw. in allen vier Figuren sind der einfachheithalber gleiche Teile mit gleichen Bezugsziffern versehen.

Alle drei Ausführungsbeispiele sind in Form einer Querschnittsdarstellung mit Ansicht auf den Lufteintritt in den Kühlerblock 8 dargestellt und werden von dem Kühlmittel in vertikaler Richtung durchflossen; hier Zufluß 9 und Abfluß 10.

In Figur 1 ist ein erfindungsgemäßer Ladeluftkühler 1 in seinem prinzipiellen Aufbau dargestellt. Der Ladeluftkühler 1 besteht im wesentlichen aus einem Kühlerblock 8, an dessen oberen und unteren Blockenden ein oberer Wassersammelkasten 4 und ein unterer Wassersammelkasten 5 angeschweißt sind. Seitlich ist der Kühlerblock 8 jeweils von einem Seitenteil 6 und 7 umgeben, welche flüssigkeitsleitend mit dem oberen Wasserkasten 4 und dem unteren Wassersammelkasten 5 verbunden sind. Der obere Wassersammelkasten 4 und untere Wassersammelkasten 5 zusammen mit den Seitenteilen 6, 7 bilden somit einen vom Kühlmittel, hier Wasser, durchströmten Aufnahmerahmen für den darin eingesetzten und mittels entsprechender Schweißnähte 13 festgelegten Kühlerblock 8.

Der Kühlerblock 8 besteht im wesentlichen aus einer Vielzahl flächig aneinander angeordneter Wasserkanäle 11 und Luftkanäle 12, 12'. Die Wasserkanäle 11 werden von Blechplatten 14, 14' und Stäben 15 gebildet, während die Luftkanäle 12, 12' von Lamellenplatten 16, 16' gebildet werden. Die Lamellenplatten 16, 16' setzen sich aus einer Vielzahl nebeneinander angeordneter Lamellenstreifen zusammen, wobei diese in bekannter Weise aus einem dünnen, gut wärmeleitenden Material hergestellt sind, welches mäanderförmig in einer Weise umgeformt wird, daß sich dadurch von der Stirnkante der Lamellenplatte 16, 16' aus betrachtet Längskanäle bilden, deren Breite, im wesentlichen der Lamellenplattendicke entspricht. Mehrere dieser Lamellenplatten 16, 16' sind im Kühlerblock 8 abwechselnd mit Wasserkanälen 11 in regelmäßigen Abständen angeordnet und miteinander zum Kühlerblock 8 verlötet. Alle Kühlernetzteile bestehen aus Aluminium und sind bevorzugt durch Hartverlötung miteinander verbunden. Grundsätzlich können die Bauteile aus unlegierten und legierten Stählen, Messing oder Kupfer bestehen. Hiervon bieten Buntmetallausführungen zwar die größten Kühlleistungsvorteile, jedoch ist die Herstellung, aufwendig und teuer.

Der sich aus den Wasserkanälen 11 und den Luftkanälen 12, 12' zusammensetzende Kühlerblock 8 wird üblicherweise als Baugruppe vorgefertigt und danach in den ebenfalls separat hergestellten Kühlmittelrahmen aus oberem Wassersammelkasten 4, unterem Wassersammelkasten 5, und den Seitenteilen 6, 7 eingesetzt.

Im Kühlerblock 8 ist jeweils eine Lamellenplatte 16 zwischen zwei Blechplatten 14 angeordnet und mit diesen über linienförmige Lötnähte entlang der Scheitellinie der Lamellen hartverlötet. Diese flächige, beidseitige Verlötung der Lamellenplatten 16 mit den Blechplatten 14 bildet aus den für sich betrachteten biegeschlaffen Blechplatten 14 und Lamellenplatten 16 eine biegesteife Sandwich-Struktur, die eine ausreichende Steifigkeit besitzt, um der im instationären Motorbetrieb auftretenden Staudruckschwankung vor dem Ladeluftkühler in einem breiten Bereich Stand zu halten.

Mehrere dieser so vorgefertigten Lamellenplatten 16 sind in der oben beschriebenen Weise nebeneinander angeordnet und jeweils über einen dazwischen vorgesehenen, durch Blechplatten 14 gebildeten Wasserkanal 11, dessen Breite mittels Stäben 15 vorgegeben ist, zu dem komplett hartverlöteten Kühlerblock 8 verbunden. Die oberen und unteren offenen Seitenflächen der Lamellenplatten 16 sind jeweils mittels entsprechend breit vorgesehener Leiste 22 abgedichtet, so daß im eingesetzten Zustand, kein Kühlwasser aus den Wassersammelkästen 4, 5 in die Luftkanäle 12, 12' gelangen kann. Jeweils zwischen zwei benachbarten Leisten 22 sind dagegen die Wasserkanäle 11 mit dem unteren Wassersammelkasten 5 und dem oberen Wassersammelkasten 4 leitend verbunden. Die die Wasserkanäle 11 bildenden Blechplatten 14, 14' sind dazu entlang der Anschlußstellen entweder mit den Wassersammelkästen 4, 5 verschweißt oder aber ebenfalls hartverlötet. Unabhängig von der Verbindungsart sind diese Anschlußstellen üblicherweise als biegestarre Verbindungen vorgesehen, wobei ein möglichst guter Wärmeübergang zwischen den Blechplatten 14, 14' und den Wassersammelkästen 4, 5 erreicht werden soll.

In dem in Figur 1 dargestellten Ausführungsbeispiel besteht der Kühlerblock 8 erfindungsgemäß aus zwei Teilblöcken 20 und 21, welche im Abstand a über entsprechende Verbindungsleisten 24, 25 miteinander verbunden sind.

Wesentlich hierbei ist, daß die Lamellenplatte 16' des Teilblockes 21 lediglich einseitig mit der Blechplatte 14 des angrenzenden Wasserkanals 11 verlötet ist. Dadurch ragen die Lamellen dieser Lamellenplatte 16' frei in den erfindungsgemäß breiter ausgebildeten Luftkanal 12'. Gleichzeitig ist die Lage der Teilblöcke 20, 21 zueinander und gegenüber den Wassersammelkästen 4 und 5 durch die Verbindungsleisten 24 und 25 eindeutig festgelegt.

Die oben beschriebenen und in Figur 1 abgebildeten konstruktiven Verhältnisse liegen bei einem erfindungsgemäßen Wärmetauscher im Ausgangszustand, also kalten Zustand vor. Ändern sich nun die Betriebsbedingungen des Ladeluftkühlers in Folge veränderter Lastanforderung an den Motor, wird der Ladeluftkühler 1, 2, 3 von einem Ladeluftstrom mit höherer Temperatur durchströmt. Dieser heiße Luftstrom strömt durch die Luftkanäle 12, 12' an den darin angeordneten Lamellen entlang und heizt diese innerhalb weniger Sekunden auf die Lufttemperatur auf. Die dabei auf die Lamellen übergegangene Wärmemenge des Ladeluftstroms wird über Wärmeleitung von dem die Wasserkanäle 11 in Richtung vom unteren Wassersammelkasten 5 zum oberen Wassersammelkasten 4 durchströmenden Kühlwasser aufgenommen und aus dem Ladeluftkühler 1 transportiert. Infolge ihrer Aufheizung biegen sich die Lamellenplatten 16, 16' in Pfeilrichtung 18, also in Querrichtung des dargestellten Ladeluftkühlers aus. Aufgrund der mäanderförmigen Führung der Lamellen innerhalb einer Lamellenplatte 16, 16' werden Längendehnungen in Strömungsrichtung des Kühlwassers konstruktiv kompensiert. Die Längendehnung der Lamellenplatten 16, 16' in Querrichtung 18 dagegen wirkt sich unmittelbar in einer

Aufweitung der Lamellenplattendicke aus, da, wie bereits oben beschrieben, die Lamellen entlang ihrer Scheitellinien fest mit den angrenzenden Blechplatten 14, 14' verbunden bzw. hartverlötet sind. Durch die mit der Verlötung einerseits gewollte Versteifung der Lamellenplatten 16, 16' ist nun andererseits der Nachteil verbunden, daß sich die temperaturbedingte Längendehnung der Lamellenflanken unmittelbar in eine Vergrößerung der Breite der Lamellenplatte 16, 16' auswirkt.

Da die die Wasserkanäle 11 bildenden Blechplatten 14, 14', wie in Figur 1 beschrieben, form- und kraftschlüssig mit den Wassersammelkästen 4 und 5 verbunden sind und in Folge der sich in unmittelbarer Nähe großer Kühlmittelmenge befindenden Anschlußstellen auch eine entsprechend geringe Wärmequerdehnung einstellt, führt die Wärmequerdehnung der Lamellen in Richtung des Pfeiles 18 schließlich zu einer Durchbiegung der Lamellenplatte 16, 16' in Querrichtung. Da die Lamellenplatten 16, 16' und die Blechplatten 14 miteinander hartverlötet sind, addieren sich die Wärmedehnungen der einzelnen Platten innerhalb eines Blockes 8.

Bei dem in Figur 2 im Betriebszustand dargestellten Wärmetauscher mit zweiteiligem Kühlerblock 8 und dazwischenliegendem Abstand a, ist es sehr deutlich zu erkennen, wie sich die einzelnen Blöcke jeweils in Querrichtung durchbiegen, bzw. aufweiten. Soweit entspricht die Reaktion des Ladeluftkühlers derjenigen bekannter Ladeluftkühler. Aufgrund der erfindungsgemäßen Teilung des Kühlerblocks 8 in der in Figur 1 dargestellten Form, wird jedoch die Summierung einzelner Wärmedehnungen gezielt unterbrochen. Durch den erfindungsgemäß vorgesehenen Abstand a zwischen der Blechplatte 14' und der Lamellenplatte 16', dient der so geschaffene breite Luftkanal 12' quasi als Puffer für die beiderseits stattfindende, erwärmungsbedingte Ausdehnung der Teilblöcke 20 und 21. Gleichzeitig wird durch die bei dieser Ausführungsform vorgenommene Zweiteilung des Kühlerblocks 8, sowohl die Durchbiegung als auch die Winkeländerung der Wasserkanäle und Luftkanäle zumindest in den an die Seitenteile 6 und 7 angrenzenden Lamellenplatten 16 halbiert.

Werden ebenfalls beidseitig des Kühlerblocks 8 und zwischen den Seitenteilen 6 und 7 Abstände vorgesehen, dann erfahren auch die äußersten Lamellenplatten 16 bei entsprechender Durchbiegung keine Verformung.

Der Abstand a ist in der in Figur 2 dargestellten Ausführungsform so bemessen, daß die wärmebedingte Ausdehnung der Lamellenplatte 16' des Teilblocks 21 zusammen mit der längendehnungsbedingten Durchbiegung des Wasserkanals 11 exakt dem Abstand a entsprechen. Da eine derartige Dimensionierung des Abstandes lediglich auf rein empirischem Wege vorgenommen werden kann, ist die Bemessung des Abstands auf diese Weise mit hohen Kosten verbunden.

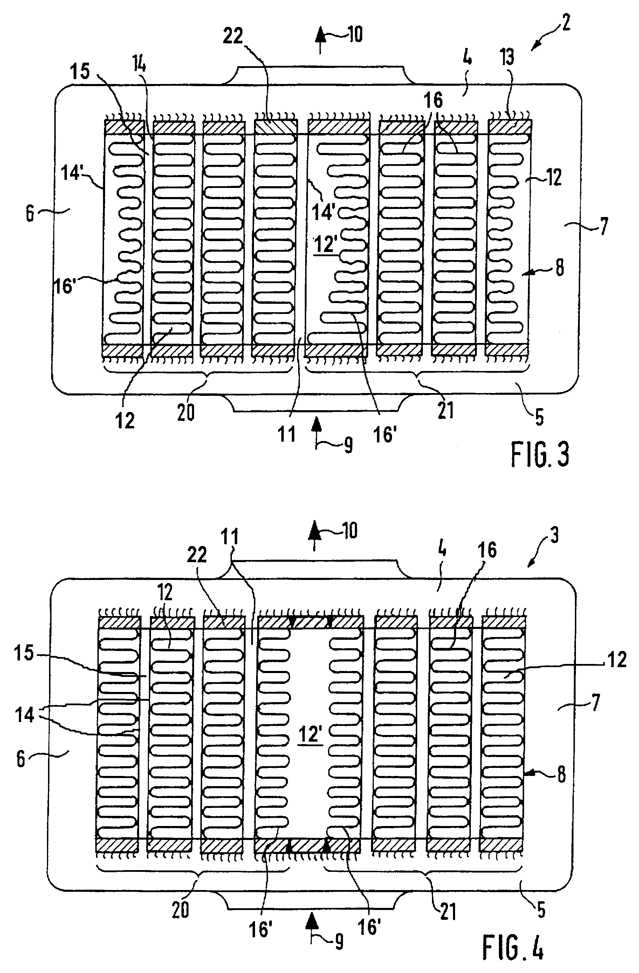

Eine Ausführungsform wie in Figur 3 dargestellt hilft, in Weiterbildung der Erfindung, diesen Kosteneinsatz einzusparen. Bei dieser Ausführungsform sind die beiden Teilblöcke 20, 21 nicht in gegenseitigem Abstand zueinander zu dem Kühlerblock 8 zusammengefaßt, sondern die Lamellenplatte 16' ist ohne Abstand zur Blechplatte 14' lediglich mit dieser nicht verlötet. Aufgrund dieser fehlenden Verlötung der Lamellenscheitel der Lamellenplatte 16', weist diese eine geringere Steifigkeit auf, als die übrigen, beidseitig hartverlöteten Lamellenplatten 16. Treten nun im Betriebszustand Wärmedehnungen auf, so weiten sich zwar ebenfalls, wie zuvor, die Teilblöcke 20 und 21 unabhängig voneinander auf, jedoch können die wärmedehnungsbedingten Spannungen nicht von der weniger versteiften Lamellenplatte 16' übertragen werden. Damit stellt die Lamellenplatte 16' erfindungsgemäß eine Soll-Schwachstelle im Kühlerblockverbund dar, welche als schwächstes Glied die auftretenden wärmebedingten Ausdehnungen beider Blöcke entlang der Trennebene dadurch kompensiert, daß deren Lamellen im Gegendruck zu dem Wasserkanal 11 entsprechend der Biegelinie elastisch verformt werden. Kühlt der Kühlerblock 8 hernach wieder ab, geht zwar die Durchbiegung der einzelnen Platten entsprechend zurück, jedoch bleiben die Lamellen der Lamellenplatte 16' dauerhaft plastisch verformt. Erfindungswesentlich hierbei ist, daß während des Abkühlungsprozesses keine plastische Rückverformung der Lamellen mehr stattfindet und diese daher auch bei erneutem Aufheizen des Ladeluftkühlers nicht mehr verformt werden, sofern kein anderes Temperaturmaximum erreicht wird.

Ein drittes Ausführungsbeispiel ist in Figur 4 abgebildet. Auch bei diesem Ausführungsbeispiel ist der Kühlerblock in zwei Teilblöcke 20 und 21 unterteilt und mit Abstand zueinander in den Kühlmittelaufnahmerahmen angebaut. Im Unterschied zu dem zuvor beschriebenen Ausführungsbeispiel treffen bei dieser Ausführungsform nun jedoch nicht eine Lamellenplatte 16 und eine Blechplatte 14 aufeinander, sondern es sind an beiden einander zugewandten Seitenflächen der Teilblöcke 20 und 21 Lamellenplatten 16' in einer Weise, wie zuvor bei der in Figur 3 dargestellten Ausführungsform die Lamellenplatte 16' einseitig befestigt. Durch eine derartige Ausgestaltung wird sichergestellt, daß in dem Luftkanal 12' Ladeluft nicht ungehindert, insbesondere ohne Kühlung, den Ladeluftkühler 3 durchströmen kann. Durch diese beidseitige Anordnung von Lamellenplatten 16' wird nämlich der Luftkanal 12' ebenfalls mit Wärmeübertragungsmittel durchzogen, wenngleich eine Übertragung der erwärmungsbedingten Verschiebung von einem auf den anderen Teilblock 20, 21 nicht stattfindet. Die Lamellenplatten 16' können hierbei deutlich kleiner ausgebildet sein als die übrigen Lamellenplatten 16. Ein Sonderfall stellt eine Ausbildung der Lamellenplatten 16' dar, bei der die Breite der Streifen halb so groß vorgesehen ist, wie diejenige der übrigen Lamellenplatten 16, so daß beide zusammen die gleiche Plattendicke einnehmen wie die anderen Lamellenplatten 16.

Treffen, bei entsprechender Aufheizung des Kühlerblockes 8 die Lamellenplatten 16' infolge der Wärmebiegung aufeinander, werden diese entweder gegebenenfalls unter elastischer Verformung ineinandergeschoben, oder aber, die jeweils für sich weniger steifen Lamellen 16' werden entsprechend plastisch verformt. Da jedoch auch hier im Falle der plastischen Verformung lediglich eine eindimensionale Beanspruchung der Lamellen stattfindet, werden die Materialgrenzen nicht erreicht und dadurch wärmeausdehnungsbedingte Störungen des Ladeluftkühlers 3 vermieden.

## Patentansprüche

1. Wärmetauscher in Plattenbauweise, insbesondere wassergekühlter Ladeluftkühler, mit einem Kühlerblock (8), wobei der Kühlerblock (8) besteht aus im wesentlichen parallel zueinander, in gleichmäßigen Abständen angeordneten:
1.
a) Blechplatten (14, 14') und Stäben (15), welche Wasserkanäle (11) bilden,
b) die Blechplatten (14) verbindenden Lamellenplatten (16, 16'), welche Luftkanäle (12, 12') bilden,
c) Seitenteilen (6), (7), und
2. Wassersammelkästen (4), (5), welche an wasserzu- (9) und wasserabführenden (10) Blockenden flüssigkeitsdicht befestigt sind, wobei der Kühlerblock (8)
entlang einer oder mehreren zur Plattenebene parallelen Ebene(n) in zwei oder mehrere Teilblöcke (20, 21) unterteilt ist, wobei die Ebene(n) entlang einer Berührungsebene einer Blechplatte (14') eines Wasserkanals (11) und einer daran angrenzenden Lamellenplatte (16') verläuft.

2. Wärmetauscher in Plattenbauweise, insbesondere wassergekühlter Ladeluftkühler, mit einem Kühlerblock (8), wobei der Kühlerblock (8) besteht aus im wesentlichen parallel zueinander, in gleichmäßigen Abständen angeordneten:
1.
a) Blechplatten (14, 14') und Stäben (15), welche Wasserkanäle (11) bilden,
b) die Blechplatten (14) verbindenden Lamellenplatten (16, 16'), welche Luftkanäle (12, 12') bilden,
c) Seitenteilen (6), (7), und
2. Wassersammelkästen (4), (5), welche an wasserzu- (9) und wasserabführenden (10) Blockenden flüssigkeitsdicht befestigt sind, wobei der Kühlerblock (8)
entlang einer oder mehreren zur Plattenebene parallelen Ebene(n) in zwei oder mehrere Teilblöcke (20, 21) unterteilt ist, und einander zugewandte Platten zweier aneinander grenzender Teilblöcke (20, 21) als Lamellenplatten (16') ausgebildet sind.

3. Wärmetauscher nach Anspruch 1 oder 2, wobei die Teilblöcke (20, 21) mit gegenseitigem Abstand zueinander angeordnet sind.

4. Wärmetauscher nach Anspruch 3, wobei der Abstand (a) derart bemessen ist, daß sich die einander gegenüberliegenden Platten zweier Teilblöcke (20), (21) aufgrund der sich bei maximaler Betriebstemperatur der Lamellenplatten (16, 16') ergebenden Wärmedehnung berühren.

## Claims

1. Heat exchanger constructed as an assembly of plates, in particular water-cooled charged-air cooler, having a cooler block (8), the cooler block (8) comprising, arranged substantially parallel to one another and at regular intervals:
1.
a) sheet-metal plates (14, 14') and rods (15), which form water channels (11),
b) lamellar plates (16, 16') which connect the sheet-metal plates (14) and form air channels (12, 12'),
c) side parts (6), (7), and
2. water-collection tanks (4), (5) which are attached in a liquid-tight manner to water-supplying (9) and water-discharging (10) block ends,
the cooler block (8) being divided into two or more sub-blocks (20, 21) along one or more plane(s) parallel to the plane of the plates, the plane(s) running along a contact plane between a sheet-metal plate (14') of a water channel (11) and an adjoining lamellar plate (16').

2. Heat exchanger constructed as an assembly of plates, in particular water-cooled charged-air cooler, having a cooler block (8), the cooler block (8) comprising, arranged substantially parallel to one another and at regular intervals:
1.
a) sheet-metal plates (14, 14') and rods (15), which form water channels (11),
b) lamellar plates (16, 16') which connect the sheet-metal plates (14) and form air channels (12, 12'),
c) side parts (6), (7), and
2. water-collection tanks (4), (5) which are attached in a liquid-tight manner to water-supplying (9) and water-discharging (10) block ends,
the cooler block (8) being divided into two or more sub-blocks (20, 21), along one or more plane(s) parallel to the plane of the plates, and mutually facing plates of two adjoining sub-blocks (20, 21) being designed as lamellar plates (16').

3. Heat exchanger according to Claim 1 or 2, in which the sub-blocks (20, 21) are arranged at a mutual distance from one another.

4. Heat exchanger according to Claim 3, in which the distance (a) is dimensioned in such a way that the mutually opposite plates of two sub-blocks (20), (21) come into contact with one another as a result of the thermal expansion which results at the maximum operating temperature of the lamellar plates (16, 16').

## Revendications

1. Echangeur de chaleur sous forme de plaques, en particulier refroidisseur de charge à refroidissement à eau, comprenant un bloc refroidisseur (8), le bloc refroidisseur (8) se composant essentiellement :
1.
a) de plaques de tôle (14, 14') et de barres (15), qui forment des canaux d'eau (11),
b) de plaques en lamelles (16, 16') connectant les plaques de tôle (14), qui forment des canaux d'air (12, 12'),
c) de parties latérales (6), (7), essentiellement parallèles les unes aux autres, disposées à intervalles réguliers, et
2. de boites collectrices d'eau (4), (5), qui sont fixées de manière étanche aux fluides aux extrémités du bloc amenant l'eau (9) et l'évacuant (10),
le bloc refroidisseur (8) étant divisé le long d'un ou de plusieurs plan(s) parallèle(s) au plan des plaques en deux ou plusieurs blocs partiels (20, 21), le ou les plan(s) s'étendant le long d'un plan de contact d'une plaque de tôle (14') d'un canal d'eau (11) et d'une plaque à lamelles (16') adjacente.

2. Echangeur de chaleur sous forme de plaques, en particulier refroidisseur de charge à refroidissement à eau, comprenant un bloc refroidisseur (8), le bloc refroidisseur (8) se composant essentiellement :
1.
a) de plaques de tôle (14, 14') et de barres (15), qui forment des canaux d'eau (11),
b) de plaques en lamelles (16, 16') connectant les plaques de tôle (14), qui forment des canaux d'air (12, 12'),
c) de parties latérales (6), (7), essentiellement parallèles les unes aux autres, disposées à intervalles réguliers, et
2. de boîtes collectrices d'eau (4), (5), qui sont fixées de manière étanche aux fluides aux extrémités du bloc amenant l'eau (9) et l'évacuant (10),
le bloc refroidisseur (8) étant divisé le long d'un ou de plusieurs plan(s) parallèle(s) au plan des plaques en deux ou plusieurs blocs partiels (20, 21), et les plaques tournées en regard l'une de l'autre de deux blocs partiels adjacents (20, 21) étant formées sous forme de plaques à lamelles (16').

3. Echangeur de chaleur selon la revendication 1 ou 2, dans lequel les blocs partiels (20, 21) sont disposés avec un intervalle mutuel l'un par rapport à l'autre.

4. Echangeur de chaleur selon la revendication 3, dans lequel l'intervalle (a) est dimensionné de telle sorte que les plaques en regard l'une de l'autre de deux blocs partiels (20), (21) se touchent en raison de la dilatation thermique résultante pour une température de fonctionnement maximale des plaques à lamelles (16, 16').
